(19) Europäisches Patentamt
European Patent Office
Office européen des brevets

(11) **EP 2 669 973 B1**

(12) **EUROPEAN PATENT SPECIFICATION**

(45) Date of publication and mention of the grant of the patent:
**01.07.2015 Bulletin 2015/27**

(51) Int Cl.:
*H01M 4/32* *(2006.01)*      *H01M 10/34* *(2006.01)*
*H01M 4/62* *(2006.01)*      *H01M 10/30* *(2006.01)*
*H01M 4/36* *(2006.01)*

(21) Application number: **13169482.0**

(22) Date of filing: **28.05.2013**

(54) **Alkaline rechargeable battery**

Wiederaufladbare alkalische Batterie

Batterie alcaline rechargeable

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.05.2012 JP 2012123099**

(43) Date of publication of application:
**04.12.2013 Bulletin 2013/49**

(73) Proprietor: **FDK Corporation**
**Tokyo 105-8677 (JP)**

(72) Inventors:
• **Imoto, Yuzo**
  **Takasaki-shi, Gunma 370-0071 (JP)**
• **Takei, Masaaki**
  **Takasaki-shi, Gunma 370-0071 (JP)**
• **Yamane, Tetsuya**
  **Takasaki-shi, Gunma 370-0071 (JP)**
• **Ito, Takeshi**
  **Takasaki-shi, Gunma 370-0071 (JP)**
• **Takasu, Masaru**
  **Takasaki-shi, Gunma 370-0071 (JP)**

(74) Representative: **Epping - Hermann - Fischer**
**Patentanwaltsgesellschaft mbH**
**Schloßschmidstraße 5**
**80639 München (DE)**

(56) References cited:
**EP-A2- 0 866 510          EP-A2- 1 164 650**
**EP-A2- 1 251 574          US-A- 5 993 995**
**US-A1- 2002 039 682**

• **DATABASE WPI Section Ch, Week 197745 Thomson Scientific, London, GB; Class L03, AN 1977-80135Y XP002708128, "ALKALINE STORAGE CELL", -& JP S52 114929 A (JAPAN STORAGE BATTERY CO LTD) 27 September 1977 (1977-09-27)**

**Description**

**BACKGROUND OF THE INVENTION**

Field of the Invention

The present invention relates to an alkaline rechargeable battery.

Description of the Related Art

Alkaline rechargeable batteries are rechargeable batteries using an alkaline electrolyte. Known nickel-metal hydride rechargeable batteries are a type of alkaline rechargeable batteries. The nickel-metal hydride rechargeable batteries comprise a positive electrode holding nickel hydroxide as a positive-electrode active material, and a negative electrode containing a hydrogen-absorbing alloy. Compared with nickel-cadmium rechargeable batteries, the nickel-metal hydride rechargeable batteries have a high capacity and are environmentally-safe, which leads to increasing applications of the nickel-metal hydride rechargeable batteries, including various portable devices and hybrid electric vehicles. With the increase in applications of the nickel-metal hydride rechargeable batteries, improvement of their properties is desired.

The resistance to self-discharge, or ability to retain charge during a long time of non-use is one of the properties whose improvement is desired with regard to the nickel-metal hydride rechargeable batteries. The higher the resistance to self-discharge, the greater proportion of charge is retained after a long time of non-use. Low self-discharge batteries, which experience a limited loss of charge during a long time of non-use after charging, have an advantage that the frequency of their needing recharging just before use is low.

Thinkable self-discharge mechanisms include a decrease in battery voltage to the reduction potential for the positive-electrode active material $Ni(OH)_2$, resulting in reduction of $Ni(OH)_2$, and thus, self-decomposition of the positive electrode; the phenomenon, called "shuttle phenomenon", that during discharge, portions segregating from the hydrogen-absorbing alloy on the negative electrode dissociate in the alkaline electrolyte to produce ions, which reach the positive electrode, become precipitated on the surface of $Ni(OH)_2$ and reduce $Ni(OH)_2$; and the phenomenon, called "hydrogen separation phenomenon", that hydrogen released from the hydrogen-absorbing alloy on the negative electrode into the alkaline electrolyte diffuses in the alkaline electrolyte, reaches the positive electrode and reduces $Ni(OH)_2$.

With regard to the nickel-metal hydride rechargeable batteries, a variety of studies have been made to reduce self-discharge. For example, it has been discovered that improvement in battery charging efficiency is effective in suppressing self-decomposition of the positive electrode. The charging efficiency can be improved by increasing the difference between the positive electrode charging potential and the oxygen evolution potential. Specifically, decreasing the positive electrode charging potential or increasing the oxygen evolution potential is effective in improving the battery charging efficiency. Decreasing the positive electrode charging potential, however, disadvantageously entails a decrease in battery operating voltage. Increasing the oxygen evolution potential, which commonly relies on addition of a rare earth compound to the positive electrode, disadvantageously increases production costs.

A nickel-metal hydride rechargeable battery disclosed in JP H09-171837 A is a known example of a battery having reduced self-discharge without suffering the aforementioned disadvantages.

The nickel-metal hydride rechargeable battery disclosed in JP H09-171837 A has a positive electrode containing an aluminum compound as an additive. The aluminum compound added to the positive electrode is effective in improving the positive-electrode charging efficiency, and low-price as compared with rare earth compounds. The aluminum compound is thus effective in reducing self-discharge at restricted production costs.

With the increase in applications of the nickel-metal hydride rechargeable batteries, there is a demand for nickel-metal hydride rechargeable batteries having further reduced self-discharge. To further reduce self-discharge, it is conceivable to add an increased amount of an aluminum compound to the positive electrode of the nickel-metal hydride rechargeable battery, for example.

However, the increased amount of aluminum in the positive electrode interferes with normal charge and discharge reactions, represented by expressions (I) and (II) below, leading to increased production of $\gamma$-NiOOH during charging, discharging and storage of the battery.

$$\beta \text{ - } Ni(OH)_2 + OH^- \rightarrow \beta \text{ - } NiOOH + H_2O + e \qquad (I)$$

$$\beta \text{ - } Ni(OH)_2 + OH^- \leftarrow \beta \text{ - } NiOOH + H_2O + e \qquad (II)$$

$\gamma$-NiOOH is less active and inferior in charge release capacity to $\beta$-NiOOH. Thus, the battery with an increased amount of $\gamma$-NiOOH exhibits reduced discharge efficiency, and thus, reduced positive-electrode active material utilization ratio.

As understood from the above, in the prior-art nickel-metal hydride rechargeable batteries, the self-discharge can be reduced only by sacrificing the positive-electrode active material utilization ratio to some degree, and the positive-electrode active material utilization ratio can be increased only by sacrificing the self-discharge rate to some degree. In other words, with regard to the prior-art nickel-metal hydride rechargeable batteries, it is difficult to achieve both a reduction in self-discharge and an increase in positive-electrode active material utilization ratio.

US 5,993,995 A discloses an alkaline rechargeable battery in accordance with the preamble of claim 1.

EP 1164650 A2 shows that an alkaline battery comprising a given amount of A1 additive in the cathode electrode material and some lithium in the electrolyte has an improved positive electrode active material utilization ratio.

## SUMMARY OF THE INVENTION

The present invention has been made taking the above problems into consideration. An object of the present invention is to provide an alkaline rechargeable battery which can achieve both a reduction in self-discharge and an increase in positive-electrode active material utilization ratio.

To achieve the object, the inventors explored a measure enabling both a reduction in self-discharge and an increase in positive-electrode active material utilization ratio in the alkaline rechargeable battery, and discovered that the production of $\gamma$-NiOOH is affected by the amount of lithium present within the battery, particularly incorporated in the positive electrode, and the active material density of the positive electrode. On the basis of this finding, the inventors achieved the present invention.

The present invention provides an alkaline rechargeable battery according to claim 1.

According to the present invention the positive electrode active material particles each comprises a base particle formed primarily of nickel hydroxide, coated with a conductive layer of a Co compound containing Li. Furthermore, according to the present invention some Li is further present in the form of LiOH within the alkaline electrolyte.

Desirably, the positive electrode mxiture is compressed to a density of 3.00 g/cm$^3$ or above.

Desirably, the aluminum compounds include at least one seclected from a group consisting of aluminum hydroxide and aluminum oxide.

The alkaline rechargeable battery according to the present invention has the following advantages: First, aluminum or an aluminum compound added as a positive-electrode additive reduces self-discharge of the battery. Second, Li present within the battery reduces the amount of $\gamma$-NiOOH produced by adding aluminum or an aluminum compound, thereby increases the positive-electrode active material utilization ratio. The present invention can thus provide an alkaline rechargeable battery exhibiting both reduced self-discharge and increased positive-electrode active material utilization ratio. Further, in the positive electrode mixture compressed to a density of 3.00g/cm$^3$ or above, change in crystal structure from $\beta$-NiOOH to $\gamma$-NiOOH is physically suppressed, and thus, production of $\gamma$-NiOOH is suppressed. Combined with the $\gamma$-NiOOH suppression effect of Li, this further increases the positive-electrode active material utilization ratio.

## BRIEF DESCRIPTION OF THE DRAWING

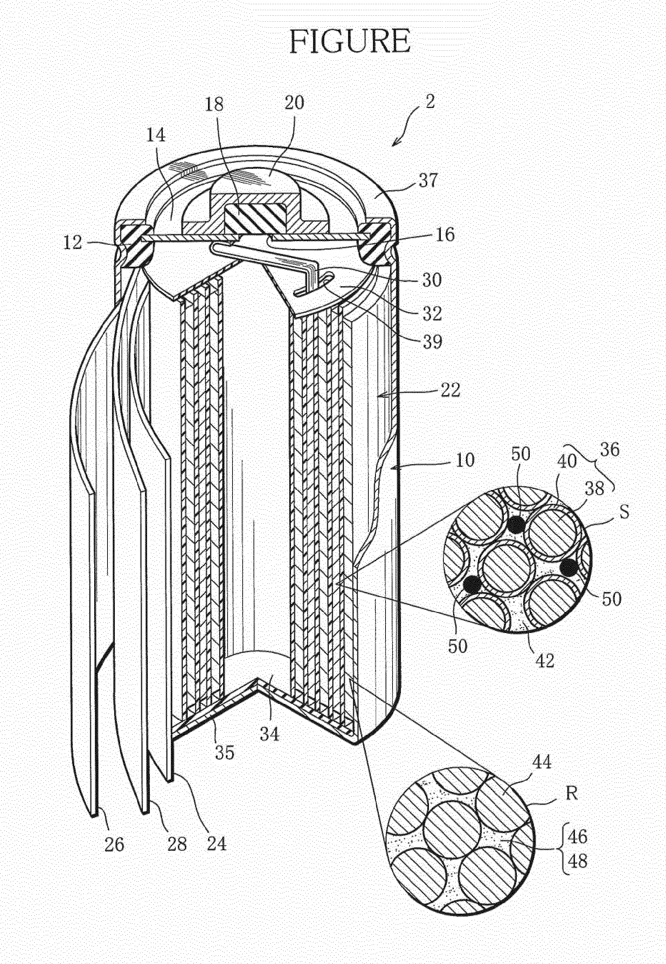

FIG. 1 is a partially-cutaway perspective view showing an embodiment of a nickel-metal hydride rechargeable battery according to the present invention.

## DETAILED DESCRIPTION OF THE PREFERRED EMBODIMENT

With reference to the drawing attached, a nickel-metal hydride rechargeable battery (hereinafter referred to simply as "battery") 2 according to the present invention is described.

The present invention, which is not restricted to batteries of a particular shape and size, is now described using the example shown in FIG. 1 in which it is applied to a cylindrical AA-size battery 2.

As seen in FIG. 1, the battery 2 has a bottomed cylindrical outer can 10 open at the top. The outer can 10 is conductive, and the bottom 35 serves as a negative terminal. Within the opening of the outer can 10 is arranged a disk-shaped conductive cover plate 14 with an annular insulating gasket 12 fitted around. The cover plate 14 and the insulating gasket 12 are fixed by swaging the rim 37 of the outer can 10. The cover plate 14 fitted with the insulating gasket 12 thus hermetically seals the outer can 10.

The cover plate 14 has a central through-hole 16 in the center, and a valve element 18 of rubber is placed on the outer surface of the cover plate 14 to close the central through-hole 16. Further, a flanged cylindrical positive terminal 20 is fixed on the outer surface of the cover plate 14 to cover the valve element 18. The positive terminal 20 presses the valve element 18 against the cover plate 14. Although not shown, the positive terminal 20 has a gas vent.

Normally, the central through-hole 16 is hermetically closed with the valve element 18. When gas is produced within the outer can 10 so that the internal pressure increases, the valve element 18 is compressed, thereby allowing passage through the central through-hole 16. As a result, gas flows out of the outer can 10 through the central through-hole 16 and the gas vent in the positive terminal 20. The central through-hole 16, the valve element 18 and the positive terminal 20 thus constitute a safety valve for the battery.

In the outer can 10 is arranged an electrode assembly 22. The electrode assembly 22 is composed of a positive electrode 24, a negative electrode 26 and a separator 28, each being a strip in shape. Specifically, the positive electrode 24 and the negative electrode 26 with the separator 28 interposed between are rolled into a spiral shape. The positive electrode 24 and the negative electrode 26 are thus stacked with the separator 28 between. The negative electrode 26 (outermost turn thereof) provides the outer circumference of the electrode assembly 22, which is in contact with the inner circumferential surface of the outer can 10. The negative electrode 26 and the outer can 10 are thus electrically connected together.

Within the outer can 10, a positive-electrode lead 30 is arranged between the electrode assembly 22 and the cover plate 14. Specifically, the positive-electrode lead 30 is connected to the positive electrode 24 at one end and the cover plate 14 at the other end. The positive terminal 20 and the positive electrode 24 are thus electrically connected by the positive-electrode lead 30 and the cover plate 14. Between the cover plate 14 and the electrode assembly 22 is arranged a round insulating member 32. The round insulating member 32 has a slit 39, through which the positive-electrode lead 30 is passed. Between the electrode assembly 22 and the bottom of the outer can 10 is also arranged a round insulating member 34.

A predetermined amount of an alkaline electrolyte (not shown) is put in the outer can 10. The electrode assembly 22 is thus impregnated with the alkaline electrolyte, enabling charge and discharge reactions on the positive and negative electrodes 24, 26. The alkaline electrolyte is not restricted to a particular one. The usable alkaline electrolytes include an aqueous sodium hydroxide solution, an aqueous lithium hydroxide solution, an aqueous potassium hydroxide solution and a mixture of two or more of these solutions. The aqueous lithium hydroxide solution is desirable because using it as the alkaline electrolyte leads to an increased amount of lithium present within the battery.

The separator 28 may be made, for example, of nonwoven fabric of polyamide, nonwoven fabric of polyolefin, such as polyethylene or polypropylene. The nonwoven fabric is desirably hydrophilically-functionalized.

The positive electrode 24 comprises a conductive and porous positive-electrode substrate, and a positive-electrode mixture held in pores of the positive-electrode substrate.

The positive-electrode substrate may be made of nickel-plated mesh, sponge-like metal material, metal fiber, or nickel foam.

As shown in circle S in FIG. 1, the positive-electrode mixture contains positive-electrode active material particles 36, a binder 42, and a positive-electrode additive 50. The binder 42 holds the positive-electrode active material particles 36 and the positive-electrode additive 50 together, and holds the positive-electrode mixture on the positive-electrode substrate. The binders usable include carboxymethylcellulose, methylcellulose, PTFE (polytetrafluoroethylene) dispersion and HPC (hydroxypropylcellulose) dispersion.

The positive-electrode active material particles 36 each comprise of a base particle 38 coated with a conductive layer 40.

The base particles 38 are particles of nickel hydroxide, which may be higher-order nickel hydroxide. The base particles 38 have desirably an average particle diameter between $8\mu m$ and $20\mu m$. In the positive electrode created not by sintering, greater surface area of the positive-electrode active material provides greater reaction area of the positive electrode, enabling higher output of the battery. For this reason, the base particles 38, which are a base for the positive-electrode active material, are desirably small particles with an average particle diameter of $20\mu m$ or below. However, provided that the thickness of the conductive layer 40 precipitated on the base particle 38 is fixed, the smaller the base particle 38 diameter, the greater the ratio of the conductive layer 40 to the base particle 38, resulting in reduced capacitance per particle. Taking into consideration also the base particles 38 yield, the diameter of the base particles is desirably $8\mu m$ or greater, more desirably between $10\mu m$ and $16\mu m$.

The base particles are desirably formed of a solid solution comprising of nickel hydroxide as a solvent and at least either cobalt or zinc as a solute. Cobalt increases inter-particle conductivity in the positive-electrode active material particles. Zinc reduces expansion of the positive electrode caused by repeated charge and discharge cycles, thereby prolonging the battery cycle life.

Relative to nickel hydroxide, the amount of cobalt is desirably between 0.5 and 6 weight % and the amount of zinc is desirably between 3 and 5 weight %.

The base particles 38 are produced, for example as follow:

First, an aqueous nickel sulfate solution is prepared. Then, an aqueous sodium hydroxide solution is gradually added to it to cause reaction between them. As a result, base particles 38 of nickel hydroxide are precipitated. If base particles of a solid solution of zinc and cobalt in nickel hydroxide should be produced, nickel sulfate, zinc sulfate and cobalt sulfate are measured out to form a predetermined composition, and an aqueous mixed solution of these substances is prepared. Then, while stirring the aqueous mixed solution, an aqueous sodium hydroxide solution is gradually added to it to cause reaction between them. As a result, base particles 38 of a solid solution of zinc and cobalt in the primary constituent nickel hydroxide are precipitated.

The conductive layer 40 is formed of a cobalt compound containing lithium (hereinafter referred to as "lithium-containing cobalt compound"). Specifically the lithium-containing cobalt compound is a cobalt compound, such as cobalt oxyhydroxide (CoOOH) or cobalt hydroxide ($Co(OH)_2$), with lithium incorporated in the crystal lattice of the cobalt compound. The lithium-containing cobalt compound, which has an extremely high conductivity, forms a good conductive network in the positive electrode, thereby increasing the positive-electrode active material utilization ratio.

The conductive layer 40 is formed as follows:

First, the base particles 38 are put into an aqueous ammonia solution, and then, an aqueous cobalt sulfate solution is added to it. As a result, cobalt hydroxide is precipitated on the base particles 38, and thus, particles coated with a cobalt hydroxide layer are formed as an intermediate product. The intermediate-product particles are then heated at predetermined temperature for a predetermined period of time, where the heating is conducted by stirring the intermediate-product particles in high-temperature air while spraying an aqueous lithium hydroxide solution onto them. The heating is desirably conducted to keep the temperature between 80°C and 100°C for 30 minutes to 2 hours. This heating process turns the hydroxide cobalt on the intermediate-product particles into a highly-conductive cobalt compound (such as cobalt oxyhydoxide) and causes lithium to be incorporated in its crystal lattice. The positive-electrode active material particles 36 with the conductive layer 40 of the lithium-containing cobalt compound are thus obtained.

To increase the stability of the conductive layer 40, the cobalt compound desirably contains sodium. To include sodium in the cobalt compound, the heating is conducted by stirring the intermediate-product particles in high-temperature air while spraying an aqueous sodium hydroxide solution in addition to the aqueous lithium hydroxide solution. As a result, positive-electrode active material particles 36 with a conductive layer 40 of a cobalt compound containing lithium and sodium are obtained.

The positive-electrode additive 50 is at least one substance selected from a group consisting of aluminum and aluminum compounds. The aluminum compounds usable include aluminum hydroxide and aluminum oxide. The positive-electrode additive 50 is prepared in powder form and mixed with the other ingredients of the positive-electrode mixture. The powder-form positive-electrode additive 50 has desirably a particle diameter between $1\mu$m and $100\mu$m.

The amount U (in parts by weight) of the positive-electrode additive 50 relative to 100 parts by weight of the positive-electrode active material powder is $0.01 \leq U < 1.5$. The amount U of the positive-electrode additive 50 less than 0.01 parts by weight does not results in a sufficient reduction in self-discharge. The amount U of the positive-electrode additive exceeding 1.5 parts by weight results in increased production of $\gamma$-NiOOH, leading to a reduction in positive-electrode active material utilization ratio. In addition, a reduced proportion of the positive-electrode active material leads to a reduced capacitance.

The positive-electrode mixture desirably contains at least one auxiliary additive selected from a group consisting of yttrium compounds, niobium compounds and tungsten compounds. The auxiliary additive suppresses separation of cobalt from the conductive layer 40, and thus, destruction of the conductive network. The desirable yttrium compounds include yttrium oxide, the desirable niobium compounds include niobium oxide, and the desirable tungsten compounds include tungsten oxide.

The auxiliary additive is mixed with the other ingredients of the positive-electrode mixture. The amount of the auxiliary additive is desirably between 0.2 and 2 parts by weight relative to 100 parts by weight of the positive-electrode active material powder. The amount of the auxiliary additive less than 0.2 parts by weight does not sufficiently suppress the separation of cobalt from the conductive layer. The amount exceeding 2 parts by weight only exhibits a saturated effect of cobalt separation suppression. In addition, a reduced proportion of the positive-electrode active material leads to a reduced capacitance.

The positive electrode 24 is produced, for example as follows:

First, a positive-electrode mixture in paste form is prepared by mixing the positive-electrode active material powder, or particles 36, produced in the above-described way, the positive-electrode additive 50, water and the binder 42. The paste-form positive-electrode mixture is packed in a sponge-like positive-electrode substrate of nickel, for example, and dried. After dried, the positive-electrode substrate filled with the positive-electrode mixture is rolled and cut. A positive electrode 24 holding the positive-electrode mixture is thus obtained.

The positive-electrode substrate holding the positive-electrode mixture is desirably rolled so that the positive-electrode mixture is compressed to a density of $3.00g/cm^3$ or higher. The positive-electrode mixture thus compressed is able to physically suppress the change of crystalline structure from $\beta$-NiOOH to $\gamma$-NiOOH, and thus, reduce production of $\gamma$-NiOOH. The positive-electrode mixture of density lower than $3.00g/cm^3$ does not sufficiently suppress the production of $\gamma$-NiOOH. The positive-electrode mixture of density exceeding $3.40g/cm^3$ only exhibits a saturated effect of $\gamma$-NiOOH suppression. In addition, the pressure applied to the positive-electrode substrate resulting in the positive-electrode mixture density exceeding $3.40g/cm^3$ is so high that it is likely to deform the positive-electrode substrate, leading to a reduction in positive electrode yield. It is extremely difficult to produce a positive electrode with nickel hydroxide powder compressed from the true density to the density exceeding $3.40g/cm^3$. The positive-electrode mixture density is thus desirably between 3.00g/cm$^3$ and 3.40g/cm$^3$.

As seen in circle S in FIG. 1, in the positive 38 coated with a conductive layer 40, contact one another so that the conductive layers 40 form a conductive network. The positive-electrode additive 50 present between the positive-electrode active material particles 36 suppresses self-reduction of nickel hydroxide, and thus, reduces self-discharge.

In the present invention, the amount of Li present within the alkaline rechargeable battery 2 and localized to the positive electrode 24 is specified. Exploring a measure to increase the positive-electrode active material utilization ratio without sacrificing the self-discharge rate, the inventors discovered that adjusting the amount of Li localized to the positive electrode within the battery is effective in suppressing production of γ-NiOOH, thereby increasing the positive-electrode active material utilization ratio, and identified the appropriate amount of Li to be localized to the positive electrode within the battery. Next, Li localized to the positive electrode within the battery is described in detail.

In the battery according to the present invention, the total amount M of Li present within the battery and localized to the positive electrode in terms of mass of LiOH per unit positive-electrode capacitance 1Ah is between 20 and 30 (mg/Ah).

The total amount M of Li less than 20 (mg/Ah) does not sufficiently suppresses the production of γ-NiOOH. The total amount M of Li exceeding 30 (mg/Ah) disadvantageously reduces discharge capacity at low temperatures. The total amount M (mg/Ah) of Li is thus limited to 30 (mg/Ah). The desirable total amount M (mg/Ah) of Li is $25 \leq M \leq 28$.

The methods applicable to have presence of Li within the battery in the form of LiOH include alkali treatment of the positive-electrode active material particles with LiOH, addition of LiOH to the alkaline electrolyte, addition of LiOH to the positive-electrode mixture in paste form, addition of LiOH to be held on the separator, and treatment of the hydrogen-absorbing alloy on the negative electrode with LiOH. These methods may be used alone or in combination. According to the present invention, at least the alkaline treatment of the positive-electrode active material particles is conducted because it easily localizes Li to the positive electrode and the total amount of Li present within the battery and localized to the positive electrode is between 20 and 30 mg/Ah in terms of weight of LiOH per unit positive-electrode capacity 1 Ah.

Furthermore, according to the present invention, Li is also present in the form of LiOh within the alkaline electrolyte of the battery: an easy way is using an aqueous lithium hydroxide solution, desirably nearly saturated with LiOH, as the alkaline electrolyte.

Next, the negative electrode 26 is described.

The negative electrode 26 comprises a strip-shaped conductive negative-electrode substrate (core) with a negative-electrode mixture held thereon.

The negative-electrode substrate is a metal sheet with through-holes distributed therein, such as a punched metal sheet or a sintered metal sheet made from metal powder using a mold. The negative-electrode mixture is not only packed in the through-holes in the negative-electrode substrate but also held on either surface of the negative-electrode substrate in the form of a layer.

As schematically shown in circle R in FIG. 1, the negative-electrode mixture contains particles 44 of a hydrogen-absorbing alloy, which is a negative-electrode active material capable of absorbing and releasing hydrogen, a conductive auxiliary agent 46 and a binder 48. The binder 48 holds the hydrogen-absorbing alloy particles 44 and the conductive auxiliary agent 46 together, and holds the negative-electrode mixture on the negative-electrode substrate. The binders usable include hydrophilic polymers and hydrophobic polymers. The conductive auxiliary agents usable include carbon black and graphite.

The hydrogen-absorbing alloy used in the form of particles 44 is not restricted to a particular one. Suitable hydrogen-absorbing alloys include rare earth-Mg-Ni hydrogen-absorbing alloys, namely hydrogen-absorbing alloys containing a rare-earth element, Mg and Ni. Specifically, the composition of the suitable rare earth-Mg-Ni hydrogen-absorbing alloys is represented by general expression: L $n_{1-x}Mg_x(Ni_{1-y}T_y)_z \cdots$ (III),

Where Ln is at least one element selected from among La, Ce, Pr, Nd, Pm, Sm, Eu, Gd, Tb, Dy, Ho, Er, Tm, Yb, Lu, Ca, Sr, Sc, Y, Yb, Er, Ti, Zr and Hf, T is at least one element selected from among V, Nb, Ta, Cr, Mo, Mn, Fe, Co, Al, Ga, Zn, Sn, In, Cu, Si, P and B, and subscripts x, y, z satisfy $0<x<1$, $0 \leq y \leq 0.5$, $2.5 \leq z \leq 4.5$, respectively.

These rare earth-Mg-Ni hydrogen-absorbing alloys have a crystalline structure called "superlattice structure" comprising of combination of AB$_2$ structure and AB$_5$ structure.

The hydrogen-absorbing alloy particles 44 are produced, for example as follows:

First, metal materials are measured out to form a predetermined composition, and mixed together. The resulting mixture is melted in an induction melting furnace, for example, and cooled in a mold to form an ingot. The ingot is then heated in an inert gas atmosphere at 900 to 1200°C for 5 to 24 hours. Then, the ingot is cooled to room temperature, then pulverized and then sieved to separate particles of a desired diameter. The hydrogen-absorbing alloy particles 44 are thus obtained.

The negative electrode 26 is produced, for example as follows:

First, a negative-electrode mixture in paste form is prepared by mixing the hydrogen-absorbing alloy powder, or particles 44, the conductive auxiliary agent 46, the binder 48 and water. The paste-form negative-electrode mixture is applied to the negative-electrode substrate and dried. After dried, the negative-electrode substrate holding the negative-electrode mixture is rolled and cut. A negative electrode 26 is thus obtained.

The positive electrode 24 and the negative electrode 26, each produced in the above-described way, are stacked with the separator 28 interposed between and rolled into a spiral shape, so that an electrode assembly 22 is obtained.

The electrode assembly 22 is arranged in the outer can 10, and then, a predetermined amount of an alkaline electrolyte is poured into the outer can 10. The outer can 10 containing the electrode assembly 22 and the alkaline electrolyte is then sealed with the cover plate 14 fitted with the positive terminal 20. The battery 2 according to the present invention is thus completed.

As understood from the above, the battery 2 according to the present invention is characterized by a combination of a positive-electrode mixture containing, as a positive-electrode additive, at least one substance selected from a group consisting of aluminum and aluminum compounds, and a specified total amount of Li present within the battery 2. This combination enables a reduction in self-discharge rate and a reduction in $\gamma$-NiOOH production, and thus, an increase in positive-electrode active material utilizations ratio. The battery 2 according to the present invention characterized by this combination is thus an excellent battery.

(Example 1)

1. Production of battery

(1) Production of positive electrode

Nickel sulfate, zinc sulfate and cobalt sulfate were measured out so that the proportions of zinc and cobalt to nickel were 4 weight % and 1 weight %, respectively. The materials thus measured out were added to a 1N (normality) aqueous sodium hydroxide solution containing ammonium ions to form a mixed solution. While stirring the mixed solution, a 10N (normality) aqueous sodium hydroxide solution was gradually added to it to cause a reaction. During the reaction, pH was stabilized between 13 and 14. As a result, base particles 38 of a solid solution of zinc and cobalt in the primary constituent nickel hydroxide were formed.

The base particles 38 were washed with ten times as much pure water, three times, then dehydrated, and then dried. The base particles 38 obtained were in globular shape and $10\mu m$ in average diameter.

Then, the base particles 38 were put in an aqueous ammonia solution, to which an aqueous cobalt sulfate solution was added to cause reaction, keeping pH between 9 and 10 during the reaction. As a result, cobalt hydroxide became precipitated on the base particles 38 to form an approximately 0.1 $\mu m$ thick layer. Thus, the base particles 38 coated with the approximately 0.1 $\mu m$ thick cobalt hydroxide layer were obtained as an intermediate product. Then, these intermediate-product particles were heated for 45 minutes by stirring them in 80°C high-temperature oxygen-containing air, while spraying a 12N (normality) aqueous sodium hydroxide solution and a 4N (normality) aqueous lithium hydroxide solution onto them. This turned the cobalt hydroxide on the base particles 38 into highly-conductive cobalt oxyhydroxide, and caused sodium and lithium to be incorporated into the cobalt oxyhydroxide layer. A conductive layer 40 of a cobalt compound containing sodium and lithium was thus formed. Then, the particles coated with the cobalt oxyhydroxide layer were filtered, washed with water, and then dried at 60°C. As a result, the base particles 38 coated with the conductive layer 40 of cobalt oxyhydroxide containing sodium and lithium were obtained as positive-electrode active material particles 36.

As a positive-electrode additive 50, aluminum hydroxide powder, or particles were prepared. The aluminum hydroxide particles were in globular shape and between 50 and $60\mu m$ in average diameter.

100 parts by weight of the positive-electrode active material powder, or particles produced in the above-described process were mixed with 0.01 parts by weight of the aluminum hydroxide powder (positive-electrode additive 50), and further with 0.9 parts by weight yttrium oxide, 0.3 parts by weight niobium oxide, 0.1 parts by weight HPC dispersion (binder 42) and 0.2 parts by weight PTFE dispersion (binder 42) to form a positive-electrode mixture in paste form. Then, the paste-form positive-electrode mixture was applied and packed in a nickel foam sheet prepared as a positive-electrode substrate. The nickel foam sheet with the positive-electrode mixture applied was dried and then rolled. The rolling was conducted so that the positive-electrode mixture was compressed to a 3.00g/cm$^3$ density. The nickel foam sheet with the compressed positive-electrode mixture held thereon was cut to a predetermined shape. A positive electrode 24 for AA size was thus obtained. The positive electrode 24 thus formed holds the positive-electrode mixture providing a positive-electrode capacitance of 2000mAh. In the completed positive electrode, the positive-electrode mixture has a structure in which the positive-electrode active material particles 36, each comprising of a base particle 38 coated with a conductive layer 40, contact one anther so that the conductive layers 40 form a conductive network, as shown in circle S in FIG. 1.

(2) Production of hydrogen-absorbing alloy and negative electrode

First, rare earths were prepared to contain 60 wt% lanthanum, 20 wt% samarium, 5 wt% praseodymium and 15% neodymium. Then, the rare earths, magnesium, nickel and aluminum were measure out in molar ratio of 0.90:0.10:3.40:0.10 to form a mixture. The mixture was melted in an induction melting furnace and casted into an ingot. Then, the ingot was heated in a 1000°C argon gas atmosphere for 10 hours. As a result, an ingot of a hydrogen-absorbing alloy of composition $(La_{0.60}Sm_{0.20}Pr_{0.05}Nd_{0.15})_{0.90}Mg_{0.10}Ni_{3.40}A_{0.10}$ was obtained. The ingot was then pulverized mechanically in an argon gas atmosphere, and then sieved, where hydrogen-absorbing alloy powder, or particles retained on 400 to 200 mesh sieves were sorted out. The obtained hydrogen-absorbing alloy powder measured 60$\mu$m in average particle diameter.

To 100 parts by weight of the obtained hydrogen-absorbing alloy powder, 0.4 parts by weight sodium polyacrylate, 0.1 parts by weight carboxymethylcellulose, 1.0 part by weight (in terms of solid) styrene-butadiene rubber (SBR) dispersion (with 50 wt% solid content), 1.0 part by weight carbon black, and 30 parts by weight water were added and mixed to form a negative-electrode mixture in paste form.

The paste-form negative-electrode mixture was applied to either surface of a perforated plate of iron, prepared as a negative-electrode substrate, uniformly with a fixed thickness. The perforated plate was 60$\mu$m thick and plated with nickel.

After dried, the perforated plate with the hydrogen absorbing alloy powder attached was rolled and cut. A negative electrode 26 for AA size holding a hydrogen-absorbing alloy of superlattice structure was thus obtained.

(3) Construction of nickel-metal hydride rechargeable battery

The positive electrode 24 and the negative electrode 26, produced in the above-described way, were stacked with a separator 28 between and rolled into an electrode assembly 22 of spiral shape. The separator 28 used was made of polypropylene nonwoven fabric and 0.1mm thick (weighed 40g/m$^2$).

In a bottomed cylindrical outer can 10, the electrode assembly 22 was arranged and a predetermined amount of an aqueous solution of KOH, NaOH and LiOH, prepared as an alkaline electrolyte, was poured. The aqueous solution was prepared to contain 0.02N (normality) KOH, 7.0N (normality) NaOH and 0.8N (normality) LiOH. The outer can 10 was then sealed with components including a cover plate 14. An AA-size nickel-metal hydride rechargeable battery 2 of nominal capacity 2000mAh was thus obtained. Nickel-metal hydride rechargeable batteries of this type will be referred to as "batteries a". Two batteries a were prepared to be subjected to disassembly and property measurement, respectively.

(4) Initial activation

At 25°C, the batteries a were charged with a 200mA (0.1It) charging current for 16 hours, and then discharged with a 400mA (0.2It) discharge current down to battery voltage 0.5V. This initial activation process was carried out twice to make the batteries a ready for use.

(5) Measurement of LiOH

One of the batteries a was disassembled to take out the positive electrode, the separator and the negative electrode to let them dissolve in nitric acid. The resulting solution was subjected to analysis with an Inductively Coupled Plasma Atomic Emission Spectrometer (ICP instrument) to determine the amount of LiOH present within the battery a using the calibration curve method. Then, the amount of LiOH per unit positive-electrode capacitance 1Ah was obtained, which is indicated in table 1.

(Examples 2, 3, comparative examples 1, 2)

Nickel-metal hydride rechargeable batteries (batteries *b, c, i, j*) were produced in the same way as the example 1 battery *a*, except that the amount of aluminum hydroxide added to form a paste-form positive-electrode mixture was varied so that the positive electrode of each battery contained aluminum hydroxide in the amount indicated in table 1 in parts by weight relative to 100 parts by weight of the positive-electrode active material powder.

(Examples 4, 5, comparative examples 3, 4)

Nickel-metal hydride rechargeable batteries (batteries *d*, *e*, *k*, *l*) were produced in the same way as the example 2 battery *b*, except that the concentration of the aqueous lithium hydroxide solution sprayed on the intermediate-product particles was varied so that each battery contained LiOH in the amount (per unit positive-electrode capacitance) indicated in table 1.

(Examples 6 to 8)

Nickel-metal hydride rechargeable batteries (batteries *f, g, h*) were produced in the same way as the example 2 battery *b*, except that the pressure applied in rolling was varied so that each battery had the positive-electrode mixture density indicated in table 1.

2. Evaluation of nickel-metal hydride rechargeable batteries

(1) Positive-electrode active material utilization ratio

In a 25° atmosphere, batteries *a* to *l* having experienced the initial activation were charged with a 200mA (0.1It) charging current for 16 hours, and then, in the same atmosphere, discharged with a 400mA (0.2It) discharge current down to discharge termination voltage 1.0V, where the discharge capacity of each battery was measured as an actual discharge capacity. By dividing the actual discharge capacity by the mass of the positive-electrode active material (nickel hydroxide) packed in each positive electrode, which had been measured in advance, the capacity per unit mass (referred to as "actual capacity per unit mass") was obtained.

Using the theoretical capacitance of nickel hydroxide, 289mAh/g, as a standard, the discharge capacity was obtained from the amount of nickel hydroxide contained in each positive electrode (referred to as "theoretical capacity"). Then, the positive-electrode active material utilization ratio was obtained by expression (IV):

```
positive-electrode active material utilization ratio (%)
= (actual     capacity     per     unit     mass/theoretical
capacity)×100...(IV)
```

The positive-electrode active material utilization ratio of each battery is indicated in table 1

(2) Self-discharge

In a 25°C atmosphere, batteries *a* to *l* having experienced the initial activation were charged with a 2000mA (1.0It) charging current by a so-called -ΔV charging method until the battery voltage dropped by 10mV after reaching the maximum (hereinafter referred to simply as "-ΔV-charged"), and then, in the same atmosphere, discharged with a 400mA (0.2It) discharging current down to discharge termination voltage 1.0V, where the discharge capacity of each battery was measured as an initial capacity. Then, in a 25°C atmosphere, the batteries were -ΔV-charged with a 2000mA (1.0It) charging current, and then left in a 60°C atmosphere for two weeks, and then, in a 25°C atmosphere, discharged with a 400mA (0.2It) discharge current down to discharge termination voltage 1.0V, where the discharge capacity of each battery was measured as an after-storage capacity. Then the charge retention ratio (%) is obtained by expression (V):

```
Charge retention ratio (%)
 = (after-storage capacity/initial capacity) × 100 ...(V)
```

The charge retention ratio in each battery is indicated in table 1.

(3) Discharge capacity at low temperature

In a 25°C atmosphere, batteries *a* to *l* having experienced the initial activation were -ΔV-charged with a 2000mA (1.0It) charging current, and then left in a -10°C low-temperature atmosphere for 3 hours.

Then, in the same low-temperature atmosphere, the batteries were discharged with a 2000mA (1.0It) discharge current down to discharge termination voltage 1.0V, where the discharge capacity of each battery was measured. Then, the ratio of the discharge capacity between each battery and the comparative example 1 battery *i* was obtained. The obtained ratio multiplied by 100 is indicated in table 1 as a low-temperature discharge capacity ratio.

[Table 1]

| | Battery | LiOH per unit positive-electrode capacitance (mg/Ah) | Aluminum hydroxide content (parts by weight) | Positive-electrode mixture density (g/cm³) | Positive-electrode active material utilization ratio (%) | Charge retention ratio (%) | Low-temperature discharge capacity ratio |
|---|---|---|---|---|---|---|---|
| Example 1 | a | 27.5 | 0.01 | 3.00 | 101 | 81.7 | 100 |
| Example 2 | b | 27.5 | 0.5 | 3.00 | 101 | 82.2 | 100 |
| Example 3 | c | 27.5 | 1.0 | 3.00 | 101 | 82.2 | 100 |
| Example 4 | d | 20.0 | 0.5 | 3.00 | 100 | 82.2 | 105 |
| Example 5 | e | 30.0 | 0.5 | 3.00 | 101 | 82.2 | 95 |
| Example 6 | f | 27.5 | 0.5 | 3.25 | 101 | 82.2 | 100 |
| Example 7 | g | 27.5 | 0.5 | 3.40 | 101 | 82.2 | 100 |
| Example 8 | h | 27.5 | 0.5 | 2.50 | 97 | 82.0 | 100 |
| Comp. Ex. 1 | i | 27.5 | 0 | 3.00 | 101 | 81.1 | 100 |
| Comp. Ex. 2 | j | 27.5 | 1.5 | 3.00 | 97 | 81.9 | 100 |
| Comp. Ex. 3 | k | 15.0 | 0.5 | 3.00 | 95 | 82.0 | 102 |
| Comp. Ex. 4 | l | 35.0 | 0.5 | 3.00 | 105 | 81.5 | 90 |

(4) Results shown in table 1

(i) The example 1 to 3 batteries a to c, which contained aluminum hydroxide as a positive-electrode additive and had a relatively large amount of LiOH (27.5 (mg/Ah)) within the battery, exhibited charge retention ratios 81.7% (battery a), 82.2% (battery b), 82.2% (battery c) and a positive-electrode active material utilization ratio 101% (batteries a to c); they were thus high in both charge retention ratio and positive-electrode active material utilization ratio. This is thought to be because the presence of aluminum hydroxide reduces self-discharge, and thus, increases the charge retention ratio, while the presence of LiOH reduces production of $\gamma$-NiOOH, and thus increases the positive-electrode active material utilization ratio.

The comparative example 1 battery i, which did not contain aluminum hydroxide, was low in charge retention ratio as compared with the batteries a to c. This shows that self-discharge is not reduced in the absence of aluminum hydroxide. The comparative example 2 battery j, which contained 1.5 parts by weight aluminum hydroxide, was low in positive-electrode active material utilization ratio as compared with the batteries a to c. This is thought to be because the increased aluminum hydroxide content led to the increased production of $\gamma$-NiOOH, which is low in charge release capacity, and thus, prevented efficient discharge.

(ii) The results on the example 4, 5 batteries d, e and the comparative example 3, 4 batteries k, l, which were varied in LiOH amount relative to the example 2 battery b, show the following: The results on the examples 2, 4, 5 show that the amount of LiOH between 20.0 (mg/Ah) and 30.0 (mg/Ah) leads to an increased charge retention ratio and an increased positive-electrode active material utilization ratio, or in other words, enables both a reduction in self-discharge and an increase in positive-electrode active material utilization ratio. The comparative example 3 battery k, which had a LiOH amount 15.0 (mg/Ah), was low in positive-electrode active material utilization ratio as compared with the examples 2, 4, 5. This is thought to be because the reduced amount of LiOH led to a reduced effect of $\gamma$-NiOOH suppression, and thus, allowed an increased production of $\gamma$-NiOOH. The comparative example 4 battery l, which had a LiOH amount 35.0 (mg/Ah), was relatively high in both charge retention ratio and positive-electrode active material utilization ratio, but low in low-temperature discharge capacity as compared with the examples 4 and 5. This is thought to be because the increased amount of LiOH reduced the discharge capacity at low temperature. Thus, it can be concluded that the amount of LiOH between 20 (mg/Ah) and 30.0 (mg/Ah) is effective.

(ii) The results on the examples 5, 6, 7, 8, which were varied in positive-electrode mixture density relative to the example 2 battery b, show the following: The results on the examples 2, 5, 6, 7 show that the positive-electrode mixture density of 3.00 (g/cm³) or above leads to increased positive-electrode active material utilization ratio. This is thought to be because application of such a high pressure on the positive-electrode mixture that achieves the positive-electrode mixture density of 3.00 (g/cm³) or above reduces the freedom of $\beta$-NiOOH lattice deformation, and thus, effectively suppresses change of crystalline structure to $\gamma$-NiOOH, and thus, production of $\gamma$-NiHOO. It is thought that this in combination with the $\gamma$-NiHOO suppression effect of LiOH enabled high active material utilization ratio. The example 8, which had a positive-electrode mixture density 2.50 (g/cm³), was low in positive-electrode active material utilization ratio as compared with the example 2. This is thought to be because the change of crystalline structure to $\gamma$-NiOOH was not effectively suppressed. Thus, it can be said that the positive-electrode mixture density is desirably 3.00 (g/cm³) or above. However, higher positive-electrode mixture density requires application of higher pressure, which can lead to a reduction in positive-electrode yield. In addition, it is difficult to compress the positive-electrode mixture to the density exceeding 3.40 (g/cm³). It can be thus concluded that the positive-electrode density is desirably between 3.00 (g/cm³) and 3.40 (g/cm³).

The present invention is not restricted to the described embodiment and examples, which may be modified in various ways. For example, the present invention is not restricted to a particular type of alkaline rechargeable battery; it can be applied to any type of alkaline rechargeable battery that uses nickel hydroxide as a positive-electrode active material, in which it produces the same advantageous effects. The present invention can be applied to alkaline rechargeable batteries of a rectangular shape; it is not restricted to batteries of a particular mechanical structure.

**Claims**

1. An alkaline rechargeable battery (2) comprising an electrode assembly (22) and an alkaline electrolyte enclosed in a hermetically-sealed container, the electrode assembly (22) being formed of a positive electrode (24) and a negative electrode (26) stacked with a separator (28) interposed between,
   wherein the positive electrode (24) holds a positive electrode mixture containing positive-electrode active material particles formed primarily of nickel hydroxide, and a positive-electrode additive distributed between the positive-electrode active material particles, the positive-electrode additive being at least one substance selected from a group consisting of aluminum and aluminum compounds, where the amount U of the positive-electrode additive in parts by weight relative to 100 parts by weight of the positive-electrode active material particles satisfies $0.01 \leq U$

< 1.5, and
Li is present in the form of LiOH within the alkaline electrolyte of the battery **characterized in that**
Li is further present within the battery in the positive-electrode active material particles, wherein the positive-electrode active material particles each comprise a base particle formed primarily of nickel hydroxide, coated with a conductive layer of a Co compound containing Li incorporated through the alkaline treatment of the particle with LiOH
where the amount of Li present within the alkaline rechargeable battery and localized to the positive electrode, measured by disassembling the battery, taking out the positive electrode, the separator, and the negative electrode, dissolving them in nitric acid, and subjecting the resulting solution to analysis with an Inductively Coupled Plasma Atomic Emission Spectrometer (ICP instrument) to determine the amount of LiOH present by using the calibration curve method, is between 20 and 30 mg/Ah in terms of weight of LiOH per unit positive-electrode capacity 1 Ah.

2. The alkaline rechargeable battery (2) according to claim 1, **characterized in that**
the positive electrode mixture is compressed to a density of 3.00 g/cm$^3$ or above.

3. The alkaline rechargeable battery (2) according to any of claims 1 to 2, **characterized in that**
the aluminum compounds include at least one selected from a group consisting of aluminum hydroxide and aluminum oxide.

**Patentansprüche**

1. Alkali-Akkumulator (2), der eine Elektrodenbaugruppe (22) und einen Alkali-Elektrolyten umfasst, die in einem hermetisch abgeschlossenen Behälter eingeschlossen sind, wobei die Elektrodenbaugruppe (22) aus einer positiven Elektrode (24) und einer negativen Elektrode (26) mit einem dazwischen angeordneten gestapelten Separator (28) bestehen,
wobei die positive Elektrode (24) eine Positive-Elektrode-Mischung hält, die Positive-Elektrode-Aktivmaterial-Partikel enthält, die primär aus Nickelhydroxid gebildet sind, und ein Positive-Elektrode-Additiv, das zwischen den Positive-Elektrode-Aktivmaterial-Partikeln verteilt ist, wobei das Positive-Elektrode-Additiv mindestens eine Substanz ist, ausgewählt aus einer Gruppe bestehend aus Aluminium und Aluminiumverbindungen, wobei die Menge U des Positive-Elektrode-Additivs in Gewichtsteilen relativ zu 100 Gewichtsteilen der Positive-Elektrode-Aktivmaterialpartikel $0,01 \leq U < 1,5$ genügt und
Li in der Form von LiOH innerhalb des alkalischen Elektrolyten der Batterie vorliegt, **dadurch gekennzeichnet, dass**
Li weiterhin innerhalb der Batterie in den Positive-Elektrode-Aktivmaterialpartikeln vorliegt, wobei die Positive-Elektrode-Aktivmaterialpartikel jeweils ein Basispartikel umfassen, das primär aus Nickelhydroxid besteht, beschichtet mit einer leitenden Schicht einer Co-Verbindung, die Li enthält, durch die alkalische Behandlung der Partikel mit LiOH inkorporiert,
wobei die innerhalb des Alkali-Akkumulators vorliegende und an der positiven Elektrode lokalisierte Menge an Li, gemessen durch Auseinandernehmen der Batterie, Herausnehmen der positiven Elektrode, des Separators und der negativen Elektrode, Auflösen dieser in Salpetersäure und Unterziehen der resultierenden Lösung einer Analyse mit einem ICP-Instrument (Inductively Coupled Plasma Atomic Emission Spectrometer), um die vorliegende Menge an LiOH zu bestimmen durch Verwenden des Kalibrierungskurvenverfahrens, zwischen 20 und 30 mg/Ah bezüglich des Gewichts von LiOH pro Einheit der Positive-Elektrode-Kapazität 1 Ah ist.

2. Alkali-Akkumulator (2) nach Anspruch 1, **dadurch gekennzeichnet, dass** die Positive-Elektrode-Mischung auf eine Dichte von 3,00 g/cm$^3$ oder darüber komprimiert ist.

3. Alkali-Akkumulator (2) nach einem der Ansprüche 1 bis 2, **dadurch gekennzeichnet, dass** die Aluminiumverbindungen mindestens eine beinhalten ausgewählt aus einer Gruppe bestehend aus Aluminiumhydroxid und Aluminiumoxid.

**Revendications**

1. Batterie alcaline rechargeable (2) comprenant un ensemble d'électrodes (22) et un électrolyte alcalin logés dans un récipient hermétiquement fermé, l'ensemble d'électrodes (22) étant constitué d'une électrode positive (24) et d'une électrode négative (26) superposées avec un séparateur (28) interposé entre elles,
dans laquelle l'électrode positive (24) comprend un mélange d'électrode positive contenant des particules de matière active d'électrode positive constituées principalement d'hydroxyde de nickel, et un additif d'électrode positive qui est distribué entre les particules de matière active d'électrode positive, l'additif d'électrode positive étant au moins une substance sélectionnée dans un groupe comprenant de l'aluminium et des composés d'aluminium, dans laquelle la quantité U de l'additif d'électrode positive en parties en poids par rapport à 100 parties en poids des particules de matière active d'électrode positive satisfait la relation $0,01 \leq U < 1,5$; et du Li est présent sous la forme de LiOH à l'intérieur de l'électrolyte alcalin de la batterie,

**caractérisée en ce que** du Li est en outre présent à l'intérieur de la batterie dans les particules de matière active d'électrode positive, dans laquelle les particules de matière active d'électrode positive comprennent chacune une particule de base qui est principalement constituée d'hydroxyde de nickel, revêtue d'une couche conductrice d'un composé de Co contenant du Li incorporé par l'intermédiaire du traitement alcalin de la particule avec du LiOH,

dans laquelle la quantité de Li présent à l'intérieur de la batterie alcaline rechargeable et localisé sur l'électrode positive, mesurée en désassemblant la batterie, en extrayant l'électrode positive, le séparateur et l'électrode négative, en les dissolvant dans de l'acide nitrique, et en soumettant la solution obtenue à une analyse avec un spectromètre d'émission atomique à plasma à couplage inductif (instrument ICP) pour déterminer la quantité de LiOH présent en utilisant le procédé de la courbe de calibrage, est comprise entre 20 mg/Ah et 30 mg/Ah en termes de poids de LiOH par unité de capacité d'électrode positive 1 Ah.

2. Batterie alcaline rechargeable (2) selon la revendication 1, **caractérisée en ce que** le mélange d'électrode positive est comprimé à une densité de 3,00 g/cm$^3$, ou plus.

3. Batterie alcaline rechargeable (2) selon l'une quelconque des revendications 1 à 2, **caractérisée en ce que** les composés d'aluminium comprennent au moins un élément sélectionné dans un groupe comprenant de l'hydroxyde d'aluminium et de l'oxyde d'aluminium.

# FIGURE

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09171837 A
- US 5993995 A
- EP 1164650 A2